(19) Europäisches Patentamt
European Patent Office
Office européen des brevets

(11) Publication number: **0 050 426**
**B1**

(12) **EUROPEAN PATENT SPECIFICATION**

(45) Date of publication of patent specification: **23.05.84**

(51) Int. Cl.$^3$: **C 09 K 3/34**

(21) Application number: **81304495.5**

(22) Date of filing: **29.09.81**

(54) **Liquid crystal display device.**

(30) Priority: **06.10.80 JP 138705/80**

(43) Date of publication of application:
**28.04.82 Bulletin 82/17**

(45) Publication of the grant of the patent:
**23.05.84 Bulletin 84/21**

(84) Designated Contracting States:
**CH DE FR GB LI**

(56) References cited:
**DE-A-2 837 218**
**FR-A-2 361 353**
**FR-A-2 377 376**

(73) Proprietor: **TOKYO SHIBAURA DENKI KABUSHIKI KAISHA**
**72, Horikawa-cho Saiwai-ku**
**Kawasaki-shi Kanagawa-ken 210 (JP)**

(72) Inventor: **Takeuchi, Fumio**
**408 Sanwa Building 1-4-2, Nakahara**
**Isogo-ku Yokohama-shi (JP)**

(74) Representative: **Freed, Arthur Woolf et al**
**MARKS & CLERK 57-60 Lincoln's Inn Fields**
**London WC2A 3LS (GB)**

**EP 0 050 426 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a liquid crystal display device in which the alignment of liquid crystal molecules is prominently stabilized and which has an excellent contrast property.

Fig. 1 shows the arrangement of the general field effect type liquid crystal display device. Referring to Fig. 1, a pair of front and back transparent electrode substrates 2, 3 are spatially set by a spacer 1 at a prescribed interval in a mutually facing state. A liquid crystal 4 is held between said transparent electrode substrates 2, 3. Polarizers 5, 6 are respectively fitted to the outer surface of the corresponding electrode substrates 2, 3. The electrode substrate 2 is formed of a glass substrate 7, transparent electrode 9 prepared from, for example, $In_2O_3$ or $SnO_2$ and orientation-treated film, 11. The electrode substrate 3 is formed of a glass substrate 8, transparent electrode 10 prepared from, for example, $In_2O_3$ or $SnO_2$ and orientation-treated film 12. As used herein, the term "orientation-treated film" is defined to mean that whose surface is so treated that the long axis of the molecules of the liquid crystal which are set in contact with said surface is orientated in a prescribed direction. The above-mentioned surface treatment of the films 11, 12 is effected by rubbing their surface by cotton cloth in one direction. The orientation treatment direction of the film 11 defines an angle of about 90° with the orientation treatment direction of the film 12. The continuous displacement of the liquid crystal molecules between the film 11 and the film 12 defines an angle of about 90° in total, indicating the so-called twisted alignment of the molecule (simply referred to as a "a twisted molecule alignment"). The liquid crystal whose molecules show said twisted alignment has the so-called rotatory polarization ability of rotating the oscillation face of an incident light through an angle of 90° along the twist of the molecule alignment. Where voltage is impressed across the electrodes 9, 10, then all the liquid crystal molecules therebetween are orientated in parallel with the direction of an electric field, causing the liquid crystal to lose the optical rotatory power. The lost or gain of the optical rotatory power of the liquid crystal means the passage or shut-out of a light in the presence of a pair of polarizers 5, 6. This principle is utilized in the display device. The alignment of the liquid crystal molecules is twisted clockwise, as shown in Fig. 2A, from the front electrode substrate 2 having the orientation treatment direction 21 to the back electrode substrate 3 having the orientation treatment direction 22 as indicated by an arrow 23. Said liquid crystal molecule alignment is also twisted counterclockwise, as indicated in Fig. 2B, from the front electrode substrate 2 having the orientation treatment direction 21 to the back electrode substrate 3 having the orientation treatment direction 22 as indicated by an arrow 24. Throughout Figs. 2A and 2B, reference numeral 20 denotes liquid crystal molecules.

Where the clockwise twisted molecule alignment and the counterclockwise twisted molecule alignment jointly appear in a single liquid crystal display device, then an irregular display results. Therefore, the conventional practice of attempting to eliminate this drawback comprises causing the orientation treatment direction of one of the paired electrode substrates to define a smaller or larger angle than 90° with the orientation treatment direction of the other electrode substrate, thereby rendering either the clockwise or counterclockwise twisted molecular alignment more ready to appear in the liquid crystal display device. Indeed, the greater or smaller the displacement of the angle of the orientation directions than 90°, the more fixed said twist direction. However, this process causes the oscillation face of a light to rotate through a smaller angle, leading to a decline in the contrast of a displayed pattern. With the conventional liquid crystal display device, the orientation treatment directions of the paired electrode substrates are set to define an angle of about 90° ± 10°, that is, 80° or 100°, in order to assure improvement in the directional stability of the twisted molecular alignment. However, this process has been undertaken at the sacrifice of the contrast property of a liquid crystal display device.

It is accordingly the object of this invention to provide a liquid crystal display device having a high directional stability of the alignment of the liquid crystal molecules and an excellent contrast property.

To attain the above-mentioned object, this invention provides a liquid crystal display device which comprises a pair of front and back electrode substrates between which a mixture of liquid crystals is held, those planes of said paired electrode substrates which contact the mass of mixed liquid crystals being so treated that the axis of liquid crystal molecules contacting said plane is orientated substantially in parallel therewith, and wherein said mixture includes a liquid crystal having a cyanophenylcyclohexane group, represented by the formula

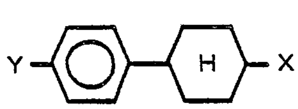 (wherein X is $C_nH_{2n+1}$, Y is CN or 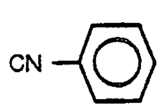

and n is an integer in the range of 2 to 7); and the orientation treatment directions of both front and back electrode substrates are displaced from each other at a prescribed angle of 91° to 98° counterclockwise as viewed from the front electrode substrate side.

The deflection angle of the orientation treatment directions of the electrode substrates may be between 92° and 97°.

This invention can be more fully understood from the following detailed description when taken in conjunction with the accompanying drawings, in which:—

Fig. 1 is a cross sectional view of a field effect type liquid crystal display device;

Fig. 2A shows the clockwise twisted molecule arrangement;

Fig. 2B indicates the counterclockwise twisted molecule arrangement;

Fig. 3 graphically sets forth the relationship between the angles defined by the orientation treatment directions of a pair of electrode substrates used with the conventional liquid crystal display device on one hand, and the directional stability of the twisted molecule arrangement and the contrast property of a displayed pattern on the other; and

Fig. 4 graphically indicates the relationship between the angles, on one hand, defined by the orientation treatment directions of a pair of electrode substrates used with a liquid crystal display device embodying this invention which is provided with mixed liquid crystals, one of which has a phenylcyclohexane group, and the directional stability of the twisted molecule arrangement and the contrast property of a displayed pattern on the other.

The present invention has conducted studies on the property of a liquid crystal material and the structure of a liquid crystal cell. As a result, it has been disclosed that where a liquid crystal display device is provided with mixed liquid crystals, at least one of which has a cyanophenylcyclohexane group represented by the formula

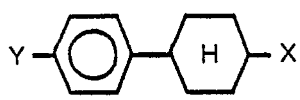 (wherein X is $C_nH_{2n+1}$, Y is CN or 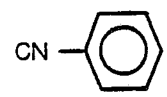

and n is an integer in the range 2 to 7), and the orientation treatment angles of both front and back electrode substrates are displaced from each other through a prescribed angle of 91° to 98° counterclockwise as viewed from the front electrode substrate side, then said liquid crystal display device indicates a high directional stability of the twisted molecule alignment and an excellent contrast property of a displayed pattern. This invention has been accomplished from the above discovery.

Liquid crystals having a cyanophenylcyclohexane group (hereinafter referred to as "PCH series liquid crystals") include:

trans-4-ethyl-(4-cyanophenyl)-cyclohexane,
trans-4-butyl-(4-cyanophenyl)-cyclohexane,
trans-4-n-pentyl-(4-cyanobiphenyl-4)-cyclohexane,
trans-4-n-pentyl-(4-cyanophenyl)-cyclohexane,
trans-n-propyl-(4-cyanophenyl)-cyclohexane, and
trans-n-heptyl-(4-cyanophenyl)-cyclohexane.

As used herein, the term "mixed liquid crystals" as defined to mean a mixture of two or more liquid crystals added together to allow for the broadening of the range of the operating temperature of a liquid crystal display device and the control of the operating voltage thereof. Said mixed liquid crystals include a mixture of two or more PCH series liquid crystals, and a mixture of said PCH series liquid crystal and a different liquid crystal of, for example, the biphenyl or ester series. It is preferred that more than 50% by weight of the PCH series liquid crystal be contained in a mixture of said PCH series liquid crystal and another liquid crystal.

Description is now given of a comparison between the excellent properties of a liquid crystal display device embodying this invention and the properties of the conventional liquid crystal display device. Fig. 3 graphically shows the relationship between the angles defined by the orientation treatment directions of a pair of electrode substrates used with the conventional liquid crystal display device on one hand and the directional stability of the twisted molecule alignment and the contrast property of a displayed pattern. Fig. 4 graphically indicates the relationship between the angles on one hand defined by the orientation treatment directions of a pair of electrode substrates used with a liquid crystal display device embodying this invention which is provided with a liquid crystal mixture ZLI 1285 (manufactured by Merck of West Germany) and the directional stability of the twisted molecule alignment and the contrast property of a displayed pattern on the other. As used herein, the term "the angle defined by the orientation treatment directions of a pair of electrode substrates" is chosen to mean an angle measured from the orientation treatment direction of the front electrode substrate to that of the back electrode substrate counterclockwise, for example, in Fig. 2A said angle means an angle "a" measured from the orientation treatment direction 21 of the front electrode substrate to the orientation treatment direction 22 of the back electrode substrate counterclockwise. Throughout Figs. 3 and 4, curve A denotes the contrast property of a pattern indicated on the liquid crystal display device. Curve A shows that where the orientation treatment directions of a paired electrode substrates are deflected from each other at an angle of 90°, then the highest contrast property of a displayed pattern is assured and said contrast property gradually falls as said deflection angle increases or decreases from 90°. Numerals given to the contrast property are counted with the contrast property at the 90° deflection expressed by 100%. The polarizing axis of a polarizer mounted on the outside of the electrode substrate

is set in parallel with the orientation treatment direction of an electrode substrate contacted by said polarizer. Curve B in Figs. 3 and 4 represents the directional stability of the twisted molecule arrangement. Curve B in Fig. 3 shows that said directional stability falls to the lowest level when the aforesaid deflection indicates 90°, namely, that the clockwise twisted molecule alignment and counterclockwise twisted molecule alignment are jointly appeared in a liquid crystal display device at the deflection angle of 90°. As the deflection angle is gradually removed from 90°, the directional stability of the twisted molecule alignment is more improved. Said directional stability of the twisted molecule alignment gets substantially fixed at a smaller deflection angle than 83° and at a larger deflection angle than 97°. In other words, the conventional liquid crystal display device failed to satisfy both the directional stability of the twisted molecule alignment and the contrast property of a displayed pattern.

In the case of a liquid crystal display device embodying this invention which is provided with mixed liquid crystals, at least one of which is of the PCH series type, as shown in Fig. 4, the directional stability of the twisted molecule alignment falls to the lowest level at an angle of 85° and is gradually improved as the deflection angle is removed from 85° and is substantially fixed at a smaller deflection angle than 79° and a larger displacement angle than 91°.

Fig. 4 shows that with a liquid crystal display device embodying this invention wherein provided with mixed liquid crystals, one of which is of the PCH series type, the rotation angle of the oscillation face of a light can be drawn nearer to 90° than in the prior art liquid crystal display device, when an angle at which the orientation treatment directions of the paired electrode substrates are deflected from each other is chosen to range from 91° to 98°, and further that a more stable twisted molecule alignment is assured.

Where a mixture of liquid crystals including the PCH series liquid crystal was formed of ZLI 1221 or ZLI 1216 (trade names of such mixed liquid crystals manufactured by Merck of West Germany), the same results as indicated in Fig. 4 were obtained. For reference, the mixed liquid crystals manufactured by Merck have the following compositions:

| ZLI 1285 | % |
|---|---|
| Trans-4-ethyl-(4-cyanophenyl)-cyclohexane | 20 |
| Trans-4-butyl-(4-cyano-phenyl)-cyclohexane | 25 |
| 4-cyano-4′-ethylbiphenyl | 15 |
| 4-cyano-4′-n-propoxybiphenyl | 10 |
| Trans-4-n-pentyl-(4′-cyanobiphenyl-4)-cyclohexane | 20 |
| Others | remainder |

| ZLI 1221 | % |
|---|---|
| Trans-4-n-pentyl-(4-cyanophenyl)-cyclohexane | 30 |
| Trans-4-n-propyl-(4-cyanophenyl)-cyclohexane | 20 |
| Trans-4-n-pentyl-(4′-cyanobiphenyl)-cyclohexane | 12 |
| Trans-4-n-heptyl-(4-cyanophenyl)-cyclohexane | 10 |
| Others | remainder |

| ZLI 1216 | % |
|---|---|
| Trans-4-n-propyl-(4-cyanophenyl)-cyclohexane | 32 |
| Trans-4-n-pentyl-(4-cyanophenyl)-cyclohexane | 18 |
| Others | remainder |

The reason why the molecules of the PCH series liquid crystal of this invention indicate such behaviors as assure the previously described directional stability of molecule alignment and the satisfactory contrast of a displayed pattern is not yet fully understood. However, it is assumed that the long axis of the liquid crystal molecules contacting the paired electrode substrates is not set completely in parallel with the orientation treatment direction of said electrode substrates, and is somewhat inclined to the plane of said electrode substrates; and consequently the PCH series liquid crystal have such anisotropic characteristic that a molecule alignment tends to indicate a clockwise twisting as against the counterclockwise twisting.

With the foregoing embodiment, the polarizing axes of polarizers were set in parallel with the orientation treatment direction of the electrode substrates. Where, however, the orientation treatment directions of the electrode substrates were chosen to jointly define an angle of 91° to 98°, while an angle defined by the polarizing axes of the polarizers was set at 90°, it was still possible to assure the directional stability of a twisted molecule arrangement and the satisfactory contrast of a displayed pattern.

Generally speaking, mixed liquid crystals containing the PCH series type have a broader range of operating temperature and makes a quicker response than other liquid crystals free from said PCH series type, thus providing a liquid crystal display device having the previously mentioned excellent properties.

**Claims**

1. A liquid crystal display device which comprises a pair of front and back electrode substrates (2, 3) between which a mixture of liquid crystals (4) is held, those planes of said paired electrode substrates (2, 3) which contact the mass of mixed liquid crystals (4) being so treated that the long axis of liquid crystal molecules contacting said planes is orientated substantially in parallel therewith, characterized in that said mixture includes a liquid crystal having a cyanophenylcyclohexane group represented by the formula

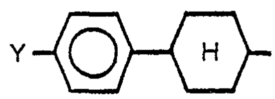 (wherein X is $C_nH_{2n+1}$, Y is CN or 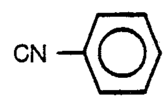

and n is an integer in the range 2 to 7); and the orientation treatment directions of both front and back electrode (2, 3) substrates are deflected from each other at a prescribed angle of 91° to 98° counterclockwise as viewed from the front electrode substrate (2) side.

2. The liquid crystal display device according to claim 1, wherein the deflection angle of the orientation treatment directions of the electrode substrates (2, 3) is chosen to range between 92° to 97°.

3. The liquid crystal display device according to claim 1 or 2, wherein a liquid crystal containing the phenylcyclohexane group is chosen to account for more than 50% by weight of a mixture of liquid crystals.

4. The liquid crystal display device according to claim 3, wherein a liquid crystal containing said phenylcyclohexane group is at least one selected from the group consisting of:
trans-4-ethyl-(4-cyanophenyl)-cyclohexane,
trans-4-butyl-(4-cyanophenyl)-cyclohexane,
trans-4-n-pentyl-(4'-cyanobiphenyl-4)-cyclohexane,
trans-4-n-pentyl-(4-cyanophenyl)-cyclohexane,
trans-n-propyl-(4-cyanophenyl)-cyclohexane, and
trans-n-heptyl-(4-cyanophenyl)-cyclohexane.

**Revendications**

1. Dispositif d'affichage à cristal liquide qui comprend une paire de substrats d'électrode antérieur et postérieur (2, 3) entre lesquels est maintenu un mélange de cristaux liquides (4), les plans desdits substrats d'électrode appariés (2, 3) qui sont en contact avec la masse de cristaux liquides mélangés (4) étant traités de façon que l'axe longitudinal des molécules de cristal liquide qui sont en contact avec lesdits plans soit orienté de manière sensiblement parallèle à ceux-ci, caractérisé en ce que ledit mélange comporte un cristal liquide possèdant un groupe cyanophénylcyclohexane représenté par la formule

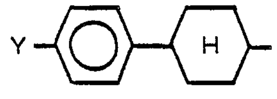 (où X est $C_nH_{2n+1}$, Y est CN ou 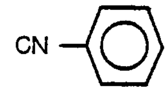

et *n* est un entier appartenant à l'intervalle de 2 à 7); et les directions de traitement d'orientation des deux substrats d'électrode antérieur et postérieur (2, 3) sont déviées l'une par rapport à l'autre d'un

angle prescrit de 91° à 98° dans le sens antihoraire pour un observateur placé du côté du substrat d'électrode antérieur (2).

2. Dispositif d'affichage à cristal liquide selon la revendication 1, où l'angle de déviation des directions de traitement d'orientation des substrats d'électrode (2, 3) est choisi de façon à se trouver dans l'intervalle de 92° à 97°.

3. Dispositif d'affichage à cristal liquide selon la revendication 1 ou 2, où un cristal liquide contenant le groupe phénylcyclohexane est choisi de façon à représenter plus de 50% du poids du mélange de cristaux liquides.

4. Dispositif d'affichage à cristal liquide selon la revendication 3, où un cristal liquide contenant ledit groupe phénylcyclohexane est au moins un cristal liquide choisi dans le groupe formé de:
trans-4-éthyl-(4-cyanophényl)-cyclohexane,
trans-4-butyl-(4-cyanophényl)-cyclohexane,
trans-4-n-pentyl-(4'-cyanobiphényle-4)-cyclohexane,
trans-n-pentyl-(4-cyanophényl)-cyclohexane,
trans-n-propyl-(4-cyanophényl)-cyclohexane, et
trans-n-heptyl-(4-cyanophényl)-cyclohexane.

**Patentansprüche**

1. Flüssigkristallanzeigevorrichtung mit einem Paar stirn- und rückseitiger Elektrodensubstrate (2, 3), zwischen denen sich ein Gemisch aus Flüssigkristallen (4) befindet, wobei diejenigen Ebenen des Elektrodensubstratpaars (2, 3), die mit der Masse der gemischten Flüssigkristalle (4) in Berührung stehen derart behandelt sind, daß die Längsachsen der mit diesen Ebenen in Berührung stehenden Flüssigkristallmoleküle praktisch parallel zu diesen ausgerichtet sind, dadurch gekennzeichnet, daß das Gemisch einen Flüssigkristall mit einer Cyanophenylcyclohexangruppe der Formel:

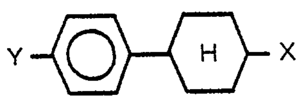

worin bedeuten:
X $C_nH_{2n+1}$;
Y CN oder 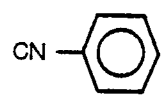 und

n eine ganze Zahl von 2 bis 7,
enthält, und die Orientierungsbehandlungsrichtungen beider stirn- und rückseitiger Elektrodensubstrate (2, 3) voneinander um einen gegebenen Winkel von 91° bis 98° im Gegenuhrzeigersinn, betrachtet von der Seite des stirnseitigen Elektrodensubstrats (2) her, abweichen.

2. Flüssigkristallanzeigevorrichtung nach Anspruch 1, dadurch gekennzeichnet, daß der Abweichungswinkel der Orientierungsbehandlungsrichtungen der Elektrodensubstrate (2, 3) zwischen 92° und 97° liegt.

3. Flüssigkristallanzeigevorrichtung nach Ansprüchen 1 oder 2, dadurch gekennzeichnet, daß der die Cyanophenylcyclohexangruppe enthaltende Flüssigkristall mehr als 50 Gew.-% des Flüssigkristallgemischs ausmacht.

4. Flüssigkristallanzeigevorrichtung nach Anspruch 3, dadurch gekennzeichnet, daß der die Cyanophenylcyclohexangruppe enthaltende Flüssigkristall aus
trans-4-Ethyl-(4-cyanophenyl)-cyclohexan,
trans-4-Butyl-(4-cyanophenyl)-cyclohexan,
trans-4-n-Pentyl-(4'-cyanobiphenyl-4)-cyclohexan,
trans-n-Pentyl-(4-cyanophenyl)-cyclohexan,
trans-n-Propyl-(4-cyanophenyl)-cyclohexan und/oder
trans-n-Heptyl-(4-cyanophenyl)-cyclohexan besteht.

F I G. 1

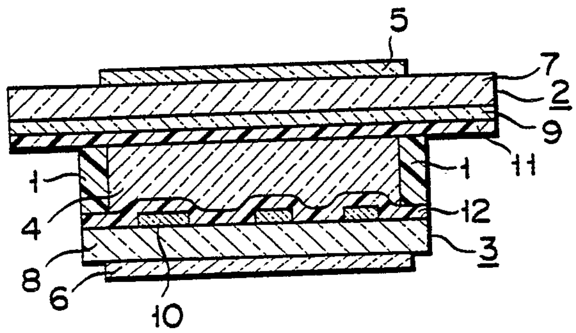


F I G. 2A

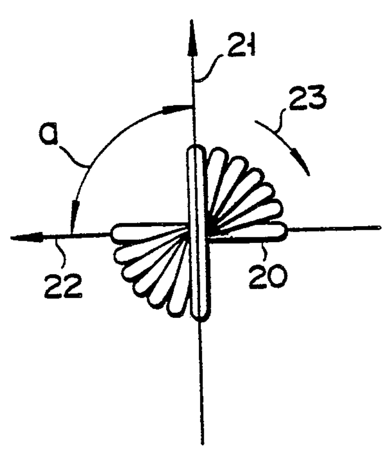


F I G. 2B

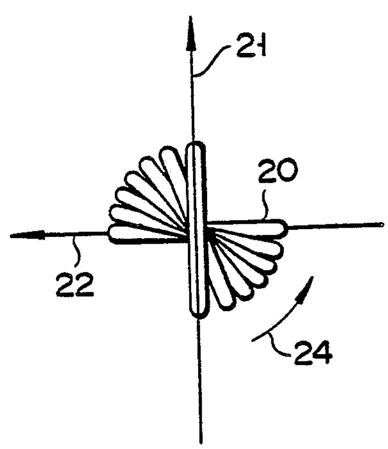

F I G. 3

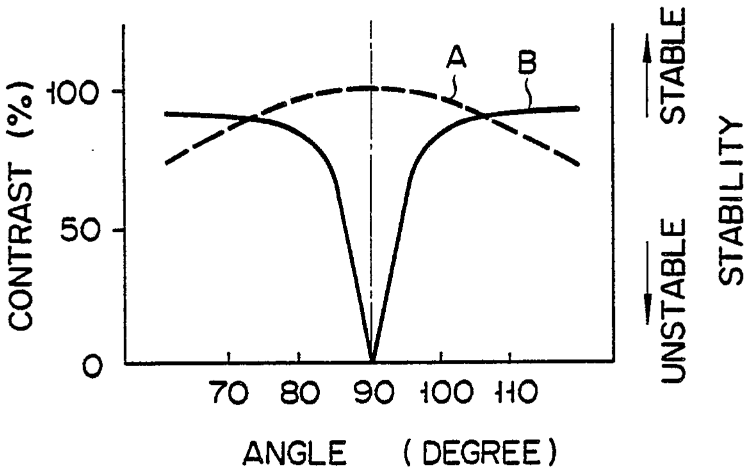
A
B
100
50
0
CONTRAST (%)
70
80
90
100
110
ANGLE (DEGREE)
STABLE
UNSTABLE
STABILITY

F I G. 4

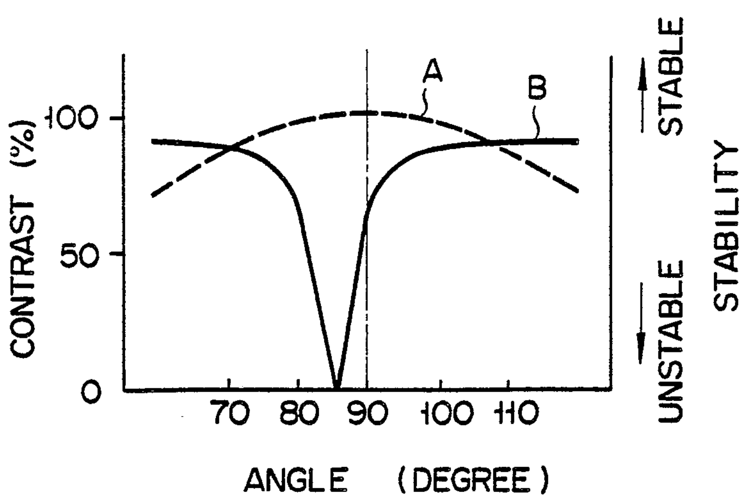
A
B
100
50
0
CONTRAST (%)
70
80
90
100
110
ANGLE (DEGREE)
STABLE
UNSTABLE
STABILITY